# EUROPÄISCHE PATENTSCHRIFT

(11) **EP 4 267 860 B1**
(45) Veröffentlichungstag und Bekanntmachung des Hinweises auf die Patenterteilung: **29.04.2026**
(21) Anmeldenummer: 21843985.9
(22) Anmeldetag: 22.12.2021
(51) Int. Cl.: F16B 7/04, F16B 4/00, F16B 3/06, B65B 7/28, B65G 47/84, F16B 1/00

(54) **VORRICHTUNG ZUM VERARBEITEN VON PHARMAZEUTISCHEN BEHÄLTERN UND BEFESTIGUNGSEINRICHTUNG FÜR EINE DERARTIGE VORRICHTUNG**
DEVICE FOR PROCESSING PHARMACEUTICAL CONTAINERS, AND SECURING DEVICE FOR SUCH A DEVICE
DISPOSITIF POUR TRAITER DES CONTENANTS PHARMACEUTIQUES ET DISPOSITIF DE FIXATION POUR UN DISPOSITIF DE CE TYPE

(30) Priorität: 23.12.2020 DE 102020134782
(43) Veröffentlichungstag der Anmeldung: 01.11.2023
(73) Patentinhaber: Bausch + Ströbel SE + Co. KG, 74532 Ilshofen (DE)
(72) Erfinder: DELL, Edgar, 74532 Ilshofen (DE); SPANG, Benjamin, 74589 Satteldorf (DE); PROZER, Daniel, 74589 Gröningen (DE)
(74) Vertreter: DTS Patent- und Rechtsanwälte PartmbB
(86) Internationale Anmeldenummer: PCT/EP2021/087278
(87) Internationale Veröffentlichungsnummer: WO 2022/136543

(56) Entgegenhaltungen:
- WO-A1-2018/020505
- DE-A1- 102009 025 910
- DE-A1- 102014 214 697
- DE-A1- 102017 126 615
- DE-A1- 102017 213 810
- DE-A1- 19 938 114
- DE-U1- 202017 106 660
- JP-A- 2011 133 073
- US-A1- 2013 318 920
- US-B1- 9 522 756

## Beschreibung

Die vorliegende Erfindung betrifft eine Befestigungseinrichtung zum lösbaren Befestigen eines Formatteils einer Vorrichtung zum Verarbeiten von pharmazeutischen Behältern oder Komponenten von pharmazeutischen Behältern an einem Halteteil der Vorrichtung, wobei das Formatteil mindestens eine behälterspezifische, behälterkomponentenspezifische oder verarbeitungsspezifische Beschaffenheit aufweist.

Außerdem betrifft die vorliegende Erfindung eine Vorrichtung zum Verarbeiten von pharmazeutischen Behältern oder Komponenten pharmazeutischer Behälter, umfassend mindestens ein Formatteil und mindestens ein diesem zugeordnetes Halteteil, wobei das mindestens eine Formatteil mindestens eine behälterspezifische, behälterkomponentenspezifische oder verarbeitungsspezifische Beschaffenheit aufweist, und wobei das mindestens eine Formatteil mit dem mindestens einen Halteteil mittels einer Befestigungseinrichtung lösbar verbindbar ist.

Die Befestigungseinrichtung der vorstehend genannten Art kommt insbesondere in einer Vorrichtung zum Verarbeiten von pharmazeutischen Behältern oder Komponenten von pharmazeutischen Behältern zum Einsatz. Typischerweise werden die pharmazeutischen Behälter, zum Beispiel Spritzen, Vials oder Karpulen, der Vorrichtung zugeführt, mit einer flüssigen oder festen pharmazeutischen Substanz befüllt, anschließend verschlossen, gegebenenfalls markiert und für die Weiterverarbeitung beispielsweise einem gemeinsamen Träger (Nest) zugeführt oder magaziniert. Die pharmazeutische Substanz ist insbesondere ein medizinisch wirksamer Stoff (Agens). Vials können auch als "Fläschchen" oder "Phiolen" bezeichnet werden.

In der Praxis kommen bei Vorrichtungen zum Verarbeiten von pharmazeutischen Behältern oder deren Komponenten sogenannte Formatteile zum Einsatz. Die Formatteile können lösbar an ihnen zugeordneten Halteteilen der Vorrichtung festgelegt werden. Halteteile sind beispielsweise an einem Gestell, Unterbau oder dergleichen der Vorrichtung angeordnet oder von diesem umfasst. Die Formatteile sind Wechselteile, die von einem Benutzer abhängig von der durchzuführenden Aufgabe angepasst an die Behälter, deren Komponenten und/oder beispielsweise den Befüllvorgang ausgetauscht werden können. Weitere verarbeitungsspezifische Eigenschaften von Formatteilen sind denkbar. Beispielsweise hängt das eingesetzte Formatteil ab von einem Behältertyp (wie etwa Spritzen, Vials oder Karpulen), der Abmessung eines Behälters (beispielsweise Vials unterschiedlicher Größe) oder der Art und Weise, wie der Behälter zu verschließen ist. In Bezug auf den letzteren Punkt sind beispielsweise Formatteile der Vorrichtung zu erwähnen, die abhängig von dem eingesetzten Schließelement (beispielsweise Pilzstopfen, Kolbenstopfen oder Bördelkappen) eingesetzt werden, um deren Verarbeitung zu ermöglichen. Hierunter ist wie beispielsweise im Fall der Behälter nicht nur die Art des Schließelementes zu erwähnen, sondern beispielsweise auch dessen Größe. Andersartige Formatteile können beispielsweise verarbeitungsspezifisch sein. Beispielsweise kommen Formatteile abhängig davon zum Einsatz, welche Substanz in die Behälter zu füllen ist - Unterschiede können sich beispielsweise abhängig davon ergeben, ob die Substanz flüssig oder pulverförmig ist, welche Viskosität eine flüssige Substanz aufweist und/oder mit welcher Menge der Substanz die Behälter zu befüllen sind.

Die DE 199 38 114 A1 beschreibt einen Roboter, an dem ein beispielsweise als Greifer zum Öffnen der Motorhauben oder Türen zu beschichtender Fahrzeugkarossen dienendes Werkzeug über eine Magnetkupplung befestigt ist, die sich bei Überlast nach Art einer Sollbruchstelle selbsttätig öffnet.

In der DE 10 2009 025 910 A1 ist ein Handhabungselement einer Greifeinrichtung für Verpackungsgüter offenbart, das an einem Rahmenelement der Greifeinrichtung mittels magnetischer Kraft und teilautomatisch oder vollautomatisch lösbar und/oder auswechselbar befestigt ist. Ferner ist ein Verfahren zur Steuerung eines solchen Handhabungselements beschrieben.

Die US 2013/0318920 A1 beschreibt einen Verschlussstabilisator einer Verschlussvorrichtung, der ein Befestigungselement umfasst, das den Verschlussstabilisator mit der Verschlussvorrichtung verbindet, so dass der Verschlussstabilisator von der Verschlussvorrichtung entfernt werden kann. Der Verschlussstabilisator kann mittels eines Magneten fixiert werden.

Die US 9,522,756 B1 beschreibt eine Befestigungseinrichtung mit Befestigungselementen, die mittels einer bajonettartigen Steck-Dreh-Verbindung miteinander verbunden werden können. Dabei durchgreift ein pilzförmiger Vorsprung an einem Befestigungselement eine langlochförmige Durchbrechung am anderen Befestigungselement. Beide Befestigungselemente umfassen Magnete, die miteinander im Verbindungszustand der Befestigungselemente zusammenwirken.

Aufgabe der vorliegenden Erfindung ist es, eine Befestigungseinrichtung und eine Vorrichtung der eingangs genannten Art bereitzustellen, mit denen eine Handhabung der Formatteile erleichtert ist.

Diese Aufgabe wird mittels einer erfindungsgemäßen Befestigungseinrichtung mit den Merkmalen von Anspruch 1 gelöst.

Die erfindungsgemäße Befestigungseinrichtung ermöglicht es, das Formatteil an dem ihm zugeordneten Halteteil mittels einer Magnetkraft zu fixieren. Zu diesem Zweck umfassen die jeweiligen Befestigungselemente Magnetelemente. Werden die Befestigungselemente zum Verbinden des Formatteils mit dem Halteteil aneinandergefügt, wirken die Magnetelemente zusammen. Zum Lösen des Formatteils vom Halteteil ist es vorzugsweise insbesondere lediglich erforderlich, die Magnetkraft zwischen den Magnetelementen zu überwinden und das Formatteil vom Halteteil zu entfernen. Sowohl das Anbringen des Formatteils am Halteteil als auch das Lösen des Formatteils vom Halteteil, insbesondere ein Formatwechsel, lassen sich auf diese Weise benutzerfreundlich durchführen.

Durch Einsatz der Magnetelemente können insbesondere herkömmliche Befestigungselemente zum Anbringen von Formatteilen eingespart werden, beispielsweise Schraubverbindungen oder federbeaufschlagte Druckelemente. Dies erlaubt es, der Vorrichtung unter Einsatz der erfindungsgemäßen Befestigungseinrichtung eine einfachere konstruktive Ausgestaltung zu verleihen.

Es versteht sich, dass unter "magnetisch" vorliegend beispielsweise ferromagnetische oder ferrimagnetische Eigenschaften verstanden werden, nicht paramagnetische oder diamagnetische Eigenschaften.

Mindestens ein Magnetelement kann ein Magnet sein. Vorzugsweise sind beide Magnetelemente Magnete. Bevorzugt kommen identische Magnete zum Einsatz, die zum Beispiel zueinander entgegengesetzt gepolt an den Befestigungselementen angeordnet sind.

Alternativ kann vorgesehen sein, dass nur ein Magnetelement ein Magnet ist und das andere Magnetelement ein magnetisierbares Material.

Der Magnet ist vorzugsweise ein Permanentmagnet, um die konstruktive Ausgestaltung der Befestigungseinrichtung zu vereinfachen. Als Permanentmagneten kommen beispielsweise NdFeB-Magnete zum Einsatz.

Vorzugsweise sind die Befestigungselemente abgesehen von den Magnetelementen nicht magnetisch oder nicht magnetisierbar.

Das Magnetelement kann auf unterschiedliche Weise am jeweiligen Befestigungselement festgelegt sein. Vorgesehen sein kann beispielsweise eine Festlegung durch Kraftschluss und/oder Formschluss und/oder Stoffschluss.

Denkbar ist zum Beispiel eine Verschraubung. Hierbei kann zum Beispiel das Magnetelement selbst am Befestigungselement verschraubt sein oder alternativ ein separates Schraubelement zum Einsatz kommen.

Denkbar ist beispielsweise ein Verpressen und/oder eine Verklebung des Magnetelementes am Befestigungselement.

Bei einer bevorzugten Ausführungsform der Erfindung kann das Magnetelement beispielsweise in das Befestigungselement eingespritzt, eingegossen oder eingewalzt sein.

Günstig ist es, dass das jeweilige Magnetelement in dem Befestigungselement frei von Kontakt mit der Atmosphäre gekapselt ist. Hierunter kann vorliegend beispielsweise verstanden werden, dass das Magnetelement so im Befestigungselement gefasst ist, dass kein oder im Wesentlichen kein Medienaustausch zwischen dem Magnetelement oder eines diese aufnehmenden Aufnahmeraumes im Befestigungselement und einer Atmosphäre für das Halteteil oder das Formatteil erfolgen kann. Auf diese Weise ist das Magnetelement vor der Atmosphäre geschützt, bei der es sich zum Beispiel um eine Schutzatmosphäre und/oder eine Atmosphäre für Dekontaminationszwecke eines Schutzgases handeln kann. Als Schutzgas kommt beispielsweise H₂O₂ zum Einsatz.

In der Befestigungsstellung stehen die Befestigungselemente formschlüssig miteinander in Eingriff. Auf diese Weise kann eine definierte, zuverlässige Relativpositionierung der Befestigungselemente und damit des Formatteils am Halteteil erzielt werden.

Vorgesehen sein kann, dass die Befestigungselemente in der Befestigungsstellung spaltlos aneinandergefügt sind.

Vorgesehen ist, dass die Magnetelemente in der Befestigungsstellung der Befestigungselemente im Abstand zueinander und frei von Kontakt miteinander angeordnet sind. Auf diese Weise kann über einen Zwischenraum zwischen den Magnetelementen die Magnetkraft auf konstruktiv einfache Weise so angemessen eingestellt werden, dass zum einen eine zuverlässige Befestigung des Formatteils am Halteteil und zum anderen ein einfaches Lösen des Formatteils vom Halteteil erzielt werden kann. Der Zwischenraum kann beispielsweise ein Luftspalt sein. Alternativ kann im Zwischenraum eine Wandung des ersten und/oder des zweiten Befestigungselementes angeordnet sein.

Bei einer konstruktiv einfachen Ausführungsform, die sich in der Praxis bewährt, umfassen die Befestigungselemente erfindungsgemäß eine Aufnahme und einen Vorsprung, der in der Befestigungsstellung der Befestigungselemente in der Aufnahme angeordnet ist. Auf diese Weise kann eine definierte, zuverlässige Relativpositionierung der Befestigungselemente erzielt werden.

Beispielsweise ist die Aufnahme am ersten Befestigungselement angeordnet und der Vorsprung am zweiten Befestigungselement.

Alternativ kann die Aufnahme am zweiten Befestigungselement angeordnet sein und der Vorsprung am ersten Befestigungselement.

Bei einer konstruktiv einfachen Ausgestaltung der Befestigungseinrichtung ist die Aufnahme zum Beispiel ein Sackloch und der Vorsprung ein Zapfen, der in das Sackloch einführbar und aus diesem herausführbar ist.

Vorteilhaft kann es sein, wenn die Aufnahme und der Vorsprung jeweils rotationssymmetrisch oder im Wesentlichen rotationssymmetrisch ausgestaltet sind bezüglich einer gemeinsamen Achse der Befestigungselemente, wenn diese die Befestigungsstellung einnehmen. Durch diese Ausgestaltung wird vorzugsweise das Aneinanderfügen der Befestigungselemente erleichtert. Darüber hinaus weisen der Vorsprung und die Aufnahme vorzugsweise bessere Reinigbarkeitseigenschaften auf.

Der Vorsprung ist vorteilhafterweise sich in Einführrichtung in die Aufnahme hinein verjüngend ausgestaltet, und die Aufnahme ist vorzugsweise ausgehend von einer Einführöffnung für den Vorsprung sich in der Einführrichtung verjüngend ausgestaltet. Dies erleichtert es, den Vorsprung in die Aufnahme einzuführen.

Ein Rand einer Einführöffnung der Aufnahme liegt vorteilhafterweise flanschartig an einer am Vorsprung angeordneten Schulter an, wenn die Befestigungselemente die Befestigungsstellung einnehmen.

Vorteilhaft kann es sein, wenn eine dem Boden der Aufnahme zugewandte Stirnseite des Vorsprungs planar ausgestaltet ist. Alternativ oder ergänzend kann beispielsweise ein Boden der Aufnahme planar ausgestaltet sein.

Die vorstehend erwähnte Verjüngung des Vorsprungs und/oder der Aufnahme ist vorteilhafterweise zumindest abschnittsweise konisch. Als vorteilhaft kann es sich beispielsweise erweisen, wenn der Vorsprung und/oder die Aufnahme

in der Einführrichtung Abschnitte unterschiedlicher Konizität umfasst. Hierunter kann beispielsweise verstanden werden, dass ein Grad der konischen Verjüngung an unterschiedlichen Abschnitten des Vorsprungs und/oder der Aufnahme verschiedenartig ausfällt.

Vorteilhaft kann es sein, wenn der Vorsprung und die Aufnahme mindestens eine korrespondierende, in der Befestigungsstellung aneinander gefügte Passung umfassen. Auf diese Weise wird ein definierter Sitz des Vorsprungs in der Aufnahme ermöglicht.

Die mindestens eine Passung ist beispielsweise eine Zylinderpassung, die durch jeweilige Mantelflächen des Vorsprungs und der Aufnahme gebildet ist.

Als vorteilhaft erweist es sich in der Praxis, wenn, bezogen auf die Einführrichtung, zwei Passungen im Abstand zueinander am Vorsprung und an der Aufnahme angeordnet sind. Der Vorsprung und die Aufnahme umfassen insbesondere an den Passungen unterschiedliche Durchmesser bezüglich der vorstehend erwähnten gemeinsamen Achse.

In der Einführrichtung der ersten Passung vorgelagert verjüngen sich vorzugsweise der Vorsprung und die Aufnahme. Zwischen den Passungen sind der Vorsprung und die Aufnahme vorzugsweise sich in der Einführrichtung verjüngend ausgestaltet.

Bei der erfindungsgemäßen Ausführungsform der Erfindung ist das Magnetelement am Boden der Aufnahme angeordnet und das Magnetelement an einer Stirnseite des Vorsprungs angeordnet.

Vorgesehen sein kann bei einer bevorzugten Ausführungsform, dass zumindest eines der Befestigungselemente einen Aufnahmekörper mit einem Aufnahmeraum aufweist oder bildet, in dem das Magnetelement angeordnet ist, an einer Seite einer Wandung des Aufnahmeraums, die dem jeweils anderen Befestigungselement abgewandt ist. Beispielsweise umfasst mindestens ein Befestigungselement die Wandung, die dem jeweils anderen Befestigungselement zugewandt ist, wobei das Magnetelement an der dem jeweils anderen Befestigungselement abgewandten Seite an der Wandung angeordnet ist. Bezogen auf das jeweils andere Befestigungselement ist das Magnetelement gewissermaßen "hinter" der Wandung angeordnet. Dadurch ist das Magnetelement beispielsweise im Aufnahmekörper mit der Wandung gefasst oder von diesem eingekapselt.

Am Boden der Aufnahme hinter der Wandung (einer Bodenwand) kann beispielsweise das Magnetelement angeordnet sein.

An der Stirnseite des Vorsprungs hinter der Wandung (einer Stirnwand) kann beispielsweise das Magnetelement angeordnet sein.

Als vorteilhaft erweist sich zum Beispiel eine formschlüssige Anordnung des Magnetelementes im Aufnahmeraum, insbesondere quer zur vorstehend erwähnten Achse.

Günstig kann es sein, wenn das Magnetelement mittels eines Andrückelementes mit einer Kraft vorzugsweise in Richtung des weiteren Befestigungselementes beaufschlagt ist. Das Andrückelement beaufschlagt beispielsweise das Magnetelement so, dass dieses an der vorstehend erwähnten Wandung anliegt.

Alternativ oder ergänzend kann vorgesehen sein, dass ein Dichtelement an der dem jeweils anderen Befestigungselement abgewandten Seite am Magnetelement angeordnet ist. Dies ist beispielsweise bei der nachfolgend erwähnten Verschraubung des Aufnahmeglieds mit dem Basisglied im Hinblick auf eine Kapselung des Magnetelementes im Befestigungselement vorteilhaft.

Vorgesehen sein kann beispielsweise, dass das Befestigungselement ein den Aufnahmeraum bildendes Aufnahmeglied umfasst und ein Basisglied, das mit dem Aufnahmeglied vorzugsweise durch Verschraubung verbunden ist. Beispielsweise umfasst ein jeweiliges Befestigungselement ein Basisglied, wobei die Aufnahmeglieder in der Befestigungsstellung in Eingriff miteinander stehen.

Vorteilhaft kann es sein, wenn die Befestigungseinrichtung eine Mehrzahl von ersten Befestigungselementen und von zweiten Befestigungselementen umfasst. Hierbei sind die ersten Befestigungselemente vorteilhafterweise identisch ausgestaltet, und die zweiten Befestigungselemente sind vorzugsweise identisch ausgestaltet.

Wie bereits erwähnt, betrifft die Erfindung auch eine Vorrichtung zum Verarbeiten von pharmazeutischen Behältern oder Komponenten pharmazeutischer Behälter.

Die eingangs genannte Aufgabe wird bei einer gattungsgemäßen Vorrichtung erfindungsgemäß dadurch gelöst, dass das mindestens eine Formatteil mit dem mindestens einen Halteteil mittels einer Befestigungseinrichtung der vorstehend beschriebenen Art lösbar verbindbar ist.

Die Vorteile, die bereits im Zusammenhang mit der Erläuterung der erfindungsgemäßen Befestigungseinrichtung erwähnt wurden, können bei der erfindungsgemäßen Vorrichtung ebenfalls erzielt werden. Vorteilhafte Ausführungsformen der Vorrichtung ergeben sich durch vorteilhafte Ausführungsformen der Befestigungseinrichtung. Diesbezüglich kann auf die voranstehenden Ausführungen verwiesen werden.

Vorgesehen sein kann beispielsweise, dass einem jeweiligen Halteteil zwei oder mehr Formatteile zugeordnet sind, die sich hinsichtlich ihrer Beschaffenheiten voneinander unterscheiden, wobei die Formatteile wahlweise mit dem Halteteil verbindbar sind. Je nachdem, welches Formatteil für die durchzuführende Aufgabe erforderlich ist, kann das Formatteil an dem Halteteil angebracht werden. Ein vorhandenes Formatteil kann zuvor vom Halteteil gelöst werden. Die Formatteile unterscheiden sich insbesondere in zumindest einer der behälterspezifischen, behälterkomponentenspezifischen oder verarbeitungsspezifischen Beschaffenheiten.

Einem Formatteil kann zum Beispiel eine Mehrzahl von Halteteilen zugeordnet sein und über eine jeweilige Befestigungseinrichtung mit den Halteteilen verbunden sein.

Das Formatteil kann zum Beispiel ein Trägerteil für die Behälter sein, insbesondere ein Transportrad oder ein Greifelement für die Behälter.

Das Formatteil kann zum Beispiel ein Stößel für ein Schließelement des Behälters sein.

Die vorliegende Erfindung ist allerdings nicht auf die zuletzt erwähnten Beispiele möglicher Formatteile beschränkt. Hierzu wird auf die voranstehenden und nachfolgenden Ausführungen verwiesen.

Die nachfolgende Erläuterung bevorzugter Ausführungsformen der Erfindung dient im Zusammenhang mit der Zeichnung der näheren Erläuterung der Erfindung. Es zeigen:
- Figur 1:: eine Draufsicht auf eine erfindungsgemäße Vorrichtung zum Verarbeiten von pharmazeutischen Behältern und deren Komponenten in bevorzugter Ausführungsform in schematischer Darstellung;
- Figur 2:: eine perspektivische Darstellung von Detail A in Figur 1;
- Figur 3:: eine Ansicht längs des Pfeiles "3" in Figur 1, in der ein Halteteil und ein Formatteil sowie erfindungsgemäße Befestigungseinrichtungen in bevorzugter Ausführungsform gezeigt sind;
- Figur 4:: eine Darstellung gemäß Detail B in Figur 3 in einer perspektivischen Explosionsdarstellung;
- Figur 5:: eine Schnittansicht gemäß Detail B in Figur 3;
- Figur 6:: eine vergrößerte Darstellung von Detail C in Figur 5;
- Figur 7:: eine perspektivische Teildarstellung der Vorrichtung aus Figur 1 mit Blickrichtung längs des Pfeiles "6" in Figur 1; und
- Figur 8:: eine schematische Schnittansicht längs der Linie 8-8 in Figur 7 in einer im Verhältnis zur Figur 7 anderen Arbeitsstellung der Vorrichtung.

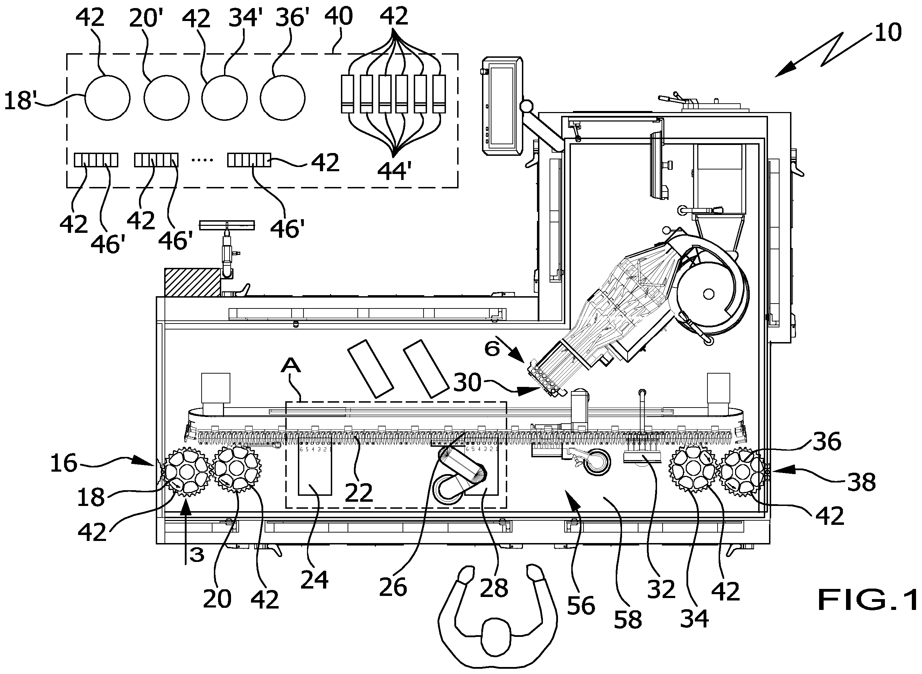

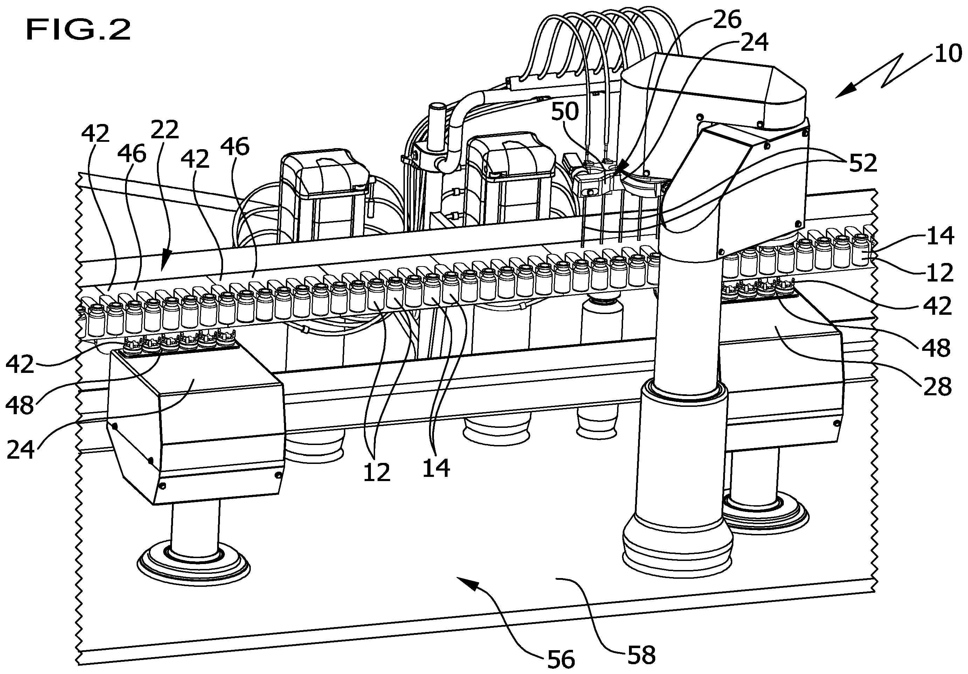

Figur 1 zeigt in Draufsicht eine insgesamt mit dem Bezugszeichen 10 belegte vorteilhafte Ausführungsform der erfindungsgemäßen Vorrichtung zum Verarbeiten von pharmazeutischen Behältern 12. Im vorliegenden Ausführungsbeispiel sind die pharmazeutischen Behälter Vials 14 (Figur 2), die mit einer pharmazeutischen Substanz zu befüllen sind.

Die Behälter 12 werden der Vorrichtung 10 an einem Zuführbereich 16 übergeben. Dabei werden die Behälter 12 einem Transportrad 18 übergeben, auf das ein weiteres Transportrad 20 folgt. Das Transportrad 20 übergibt die Behälter 12 an eine lineare Transporteinrichtung 22.

Von der Transporteinrichtung 22 werden die Behälter 12 zunächst zu einer Wiegestation 24, danach zu einer Befüllstation 26, zu einer weiteren Wiegestation 28, zu einer Schließstation 30 und schließlich zu einer Kontrollstation 32 transportiert.

Im Anschluss an die Kontrollstation 32 werden die Behälter 12 über ein Transportrad 34 an ein weiteres Transportrad 36 übergeben, an das sich ein Abgabebereich 38 anschließt.

Es versteht sich, dass die Vorrichtung 10 beispielsweise am Zuführbereich 16 Einrichtungen zum Zuführen der Behälter 12 aus einem gemeinsamen Träger (Nest) und/oder als Volumenmaterial (Bulk) umfassen kann. In entsprechender Weise kann die Vorrichtung 10 im Abgabebereich 38 Einrichtungen zum Übergeben der Behälter 12 in den gemeinsamen Träger (Nest) und/oder zum Magazinieren der Behälter 12 umfassen.

Mit der Vorrichtung 10 können Behälter 12 unterschiedlichen Typs und/oder unterschiedlicher Abmessungen verarbeitet werden. Beispielsweise können abweichend von den hier gezeigten Vials 14 mit der Vorrichtung 10 Spritzen und/oder Karpulen verarbeitet werden. Die Behälter 12, egal ob Vials, Spritzen oder Karpulen, können unterschiedliche Abmessungen umfassen.

Je nach zu verarbeitenden Behältern 12 kann die Vorrichtung 10 an die behälterspezifischen, behälterkomponentenspezifischen (beispielsweise Schließelemente wie Pilzstopfen, Kolbenstopfen oder Bördelkappen) und/oder an verarbeitungsspezifische Beschaffenheiten der Behälter 12 angepasst werden. Die verarbeitungsspezifische Beschaffenheit bezieht sich beispielsweise auf die Ausgestaltung der Befüllstation 26 abhängig davon, welches Pharmazeutikum in die Behälter 12 zu füllen ist. Beispielsweise können Unterschiede hinsichtlich der Form des Pharmazeutikums (flüssig oder pulverförmig), der Menge der einzufüllenden Substanz oder deren Fließeigenschaften bestehen, beispielsweise der Viskosität.

Um die Vorrichtung 10 an die Aufgabe zum Verarbeiten der jeweiligen Behälter 12 anzupassen, weist die Vorrichtung 10 vorzugsweise eine Mehrzahl von Formatsätzen 40 auf. Figur 1 zeigt schematisch einen nicht eingesetzten Formatsatz 40. Der Formatsatz 40 kann beispielsweise bei einem Umbau der Vorrichtung 10 den in dieser eingesetzten Formatsatz ersetzen.

Ein jeweiliger Formatsatz 40 umfasst mindestens ein Formatteil 42 und vorliegend insbesondere eine Mehrzahl von Formatteilen 42. Die Formatteile 42 weisen behälterspezifische, behälterkomponentenspezifische oder verarbeitungsspezifische Beschaffenheiten auf. Beispielsweise unterscheiden sich Formatteile 42 gleicher Art, wie zum Beispiel Transporträder, dadurch, dass Behälter 12 unterschiedlichen Typs und/oder unterschiedlicher Größe verarbeitet werden müssen.

Je nach Aufgabe kann es sein, dass nicht ein vollständiger Formatsatz 40 zu wechseln ist, sondern nur ein Teil von Formatteilen 42 des Formatsatzes 40.

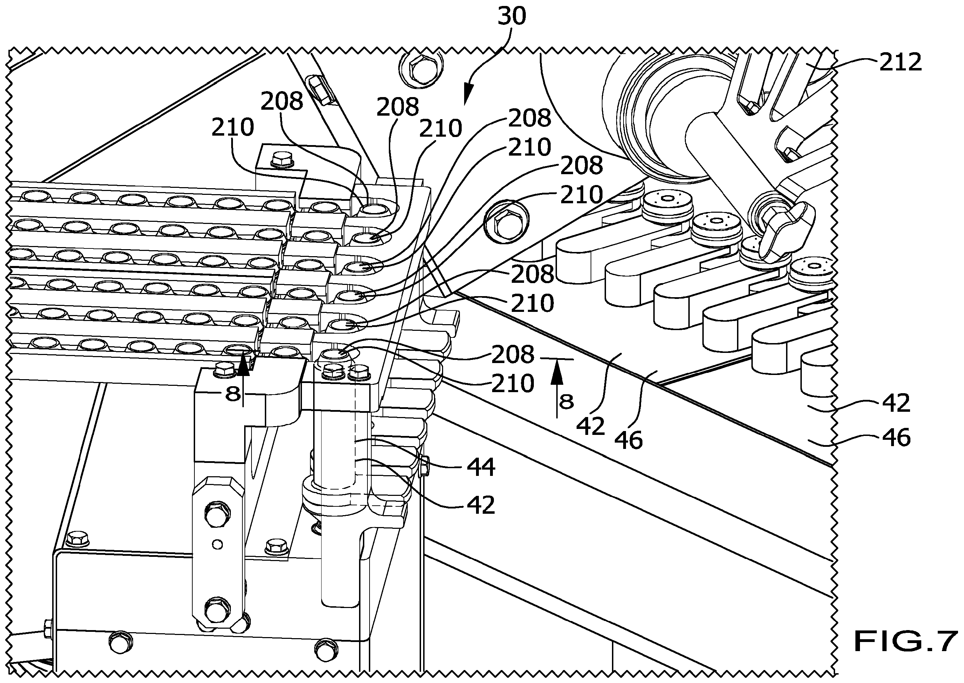

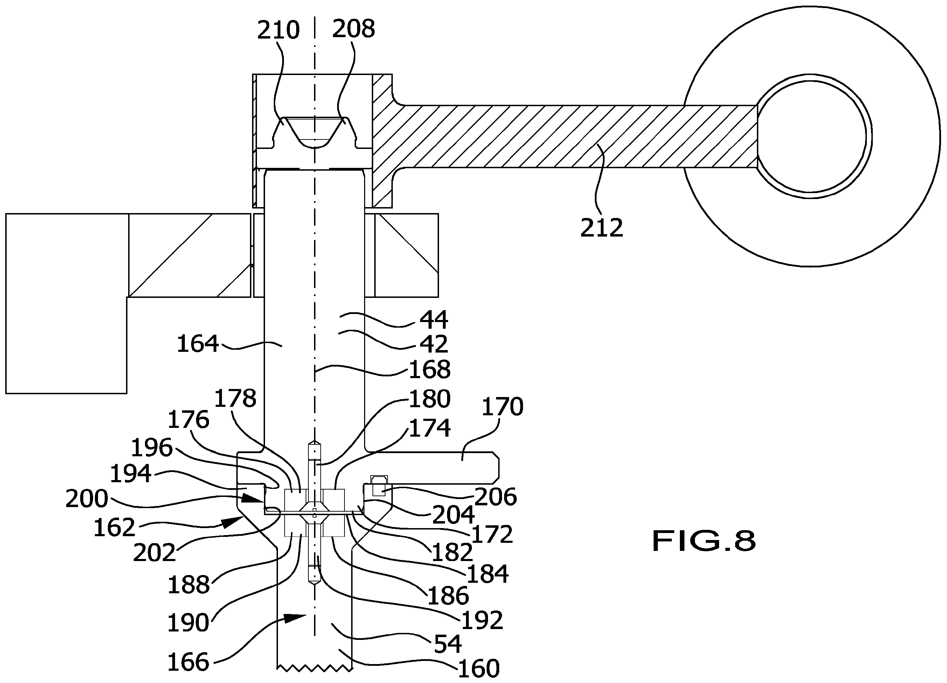

Beispielhaft zeigt der Formatsatz 40 Transporträder 18', 20', 34' und 36' als Tauschteile für die Transporträder 18, 20, 34 bzw. 36. Darüber hinaus zeigt der Formatsatz 40 beispielsweise Stößel 44' als Tauschteile für Stößel 44, die in der Schließstation 30 zum Einsatz kommen (Figuren 7 und 8).

Ferner zeigt der Formatsatz 40 beispielhaft Greifelemente 46', die als Tauschteile für Greifelemente 46 zum Einsatz kommen können. Die Greifelemente 46 werden in der Transporteinrichtung 22 eingesetzt, um jeweils eine Mehrzahl von Behältern 12 zu halten (Figur 2).

Weitere mögliche Formatteile sind zum Beispiel Aufnahmeelemente 48 an den Wiegestationen 24, 28 und ein Halteelement 50 für Nadeln 52 an der Befüllstation 26.

Die Formatteile 42 sind bei der Vorrichtung 10 mit Halteteilen 54 lösbar verbunden, wenn sie zum Einsatz kommen. Durch Lösen des Formatteils 42 vom Halteteil 54 kann insbesondere ein Formatwechsel durchgeführt werden, bei dem das Formatteil 42 durch ein weiteres Formatteil 42 ersetzt wird. Dementsprechend kann einem jeweiligen Halteteil 54 eine Mehrzahl von Formatteilen 42 zugeordnet sein.

Dies wird nachfolgend zunächst am Beispiel des Transportrades 18 als Formatteil 42 erläutert. Das Transportrad 18 kann bei einem Formatwechsel beispielsweise durch das Transportrad 18' ersetzt werden. Die nachfolgenden Ausführungen in Bezug auf das Transportrad 18 können insbesondere in identischer oder gleichartiger Weise für die Transporträder 20, 34 und 36 gelten.

Die Halteteile 54 für die Formatteile 42 sind beispielsweise an einem Gestell 56 oder Unterbau der Vorrichtung 10 festgelegt. Das Gestell 56 ist zum Beispiel auf einem Boden eines Labors oder dergleichen aufgestellt.

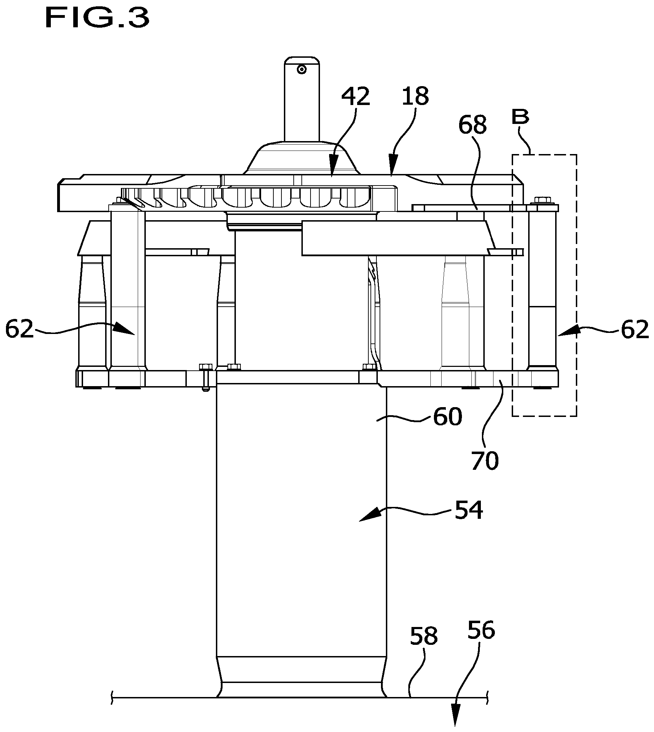

Als Halteteil 54 für das Transportrad 18 kommt ein auf einem Aufstellelement 58 des Gestells 56 angeordnetes Säulenelement 60 zum Einsatz (Figur 3).

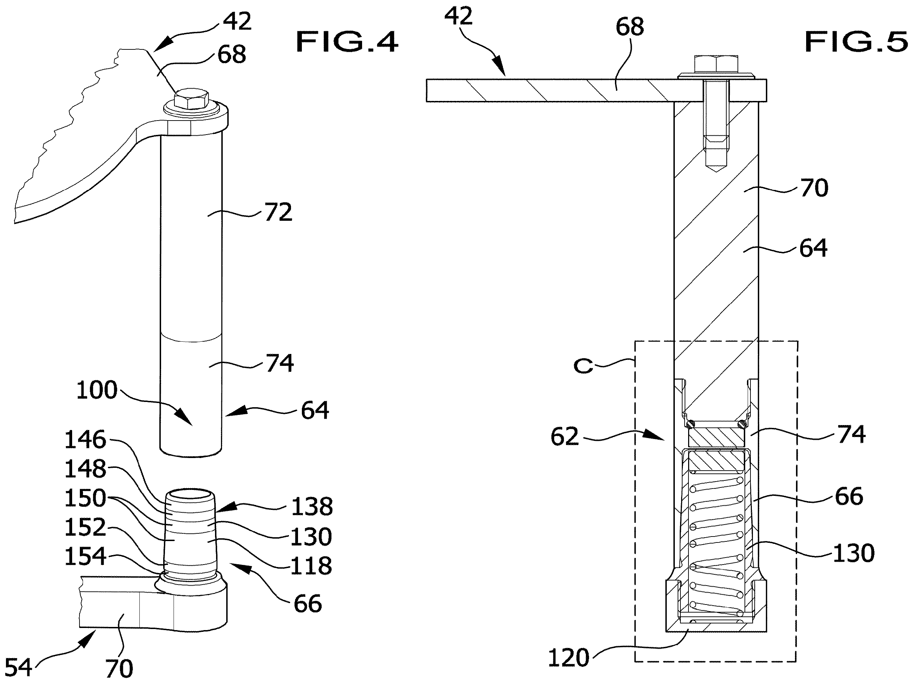

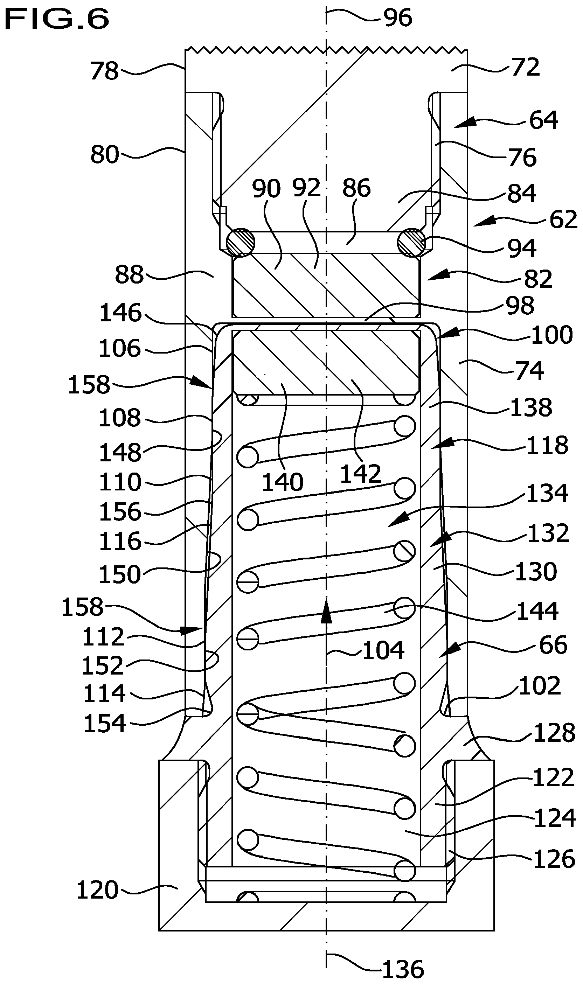

Gemäß der Erfindung kann das als Transportrad 18 ausgestaltete Formatteil 42 über mindestens eine Befestigungseinrichtung 62 mit dem Halteteil 54 lösbar verbunden werden. Vorliegend ist eine Mehrzahl von Befestigungseinrichtungen 62 vorgesehen, um das Transportrad 18 am Halteteil 54 festzulegen. Die Ausgestaltung der Befestigungseinrichtungen 62 ist identisch, so dass nachfolgend in Bezug auf die Figuren 3 bis 6 nur auf eine der Befestigungseinrichtungen 62 eingegangen wird.

Die Befestigungseinrichtung 62 umfasst ein vom Formatteil 42 umfasstes erstes Befestigungselement 64 sowie ein vom Halteteil 54 umfasstes zweites Befestigungselement 66.

Im vorliegenden Beispiel ist das erste Befestigungselement 64 an einem Halteglied 68 des Transportrades 18 festgelegt. Das zweite Befestigungselement 66 ist an einem Halteglied 70 festgelegt, wobei das Halteglied 70 am Säulenelement 60 festgelegt ist.

Das Befestigungselement 64 ist stiftförmig ausgebildet und umfasst vorliegend ein Basisglied 72, das an einem Ende am Halteglied 68 festgelegt ist. An dem dem Halteglied 68 abgewandten Ende umfasst das Befestigungselement 64 ein Aufnahmeglied 74. Das Aufnahmeglied 74 ist mit dem Basisglied 72 verbunden, vorliegend durch eine Verschraubung 76. Hierbei weist das Aufnahmeglied 74 ein Innengewinde auf, das mit einem Außengewinde des Basisgliedes 72 koppelt. Das Basisglied 72 und das Aufnahmeglied 74 sind so bemessen, dass deren jeweilige Mantelflächen 78, 80 an der Außenseite miteinander fluchten.

Das Aufnahmeglied 74 bildet einen Aufnahmekörper 82, der einen Endabschnitt 84 des Basisgliedes 72 übergreift. Ein Aufnahmeraum 86 des Aufnahmegliedes 74 ist in Umfangsrichtung und stirnseitig von einer Wandung 88 des Aufnahmegliedes 74 und der Stirnseite gegenüberliegend vom Basisglied 72 begrenzt.

Im Aufnahmeraum 86 ist ein Magnetelement 90 formschlüssig aufgenommen. Bei dem Magnetelement 90 handelt es sich um einen Magneten 92, insbesondere einen Permanentmagneten, beispielsweise einen NdFeB-Magneten. Beispielsweise ist der Magnet 92 scheibenförmig. Ein Dichtelement 94 ist zwischen dem Magneten 92 und dem Endabschnitt 84 angeordnet und dichtet den Aufnahmeraum 86 gegenüber der Verschraubung 76 ab.

Das Befestigungselement 66 definiert eine Achse 96 und ist in Bezug auf diese insgesamt rotationssymmetrisch ausgestaltet.

Das Magnetelement 90 ist so im Aufnahmeraum 86 angeordnet, dass es an dem stirnseitigen Abschnitt der Wandung 88 anliegt. Die Wandung 88 bildet einen Boden 98 einer Aufnahme 100 für das zweite Befestigungselement 66. Der Magnet 92 ist am Boden 98 angeordnet, in Bezug aus das Befestigungselement 66 hinter der Wandung 88.

Die Aufnahme 100 erstreckt sich in axialer Richtung und wird in Umfangsrichtung von der Wandung 88 begrenzt. An einer Endseite umfasst die Aufnahme 100 eine Einführöffnung 102. Das Befestigungselement 66 kann, wie nachfolgend erläutert, in einer Einführrichtung 104 in die Aufnahme 100 teilweise eingeführt werden.

Ausgehend von der Einführöffnung 102 verjüngt sich die Aufnahme 100 in der Einführrichtung 104. Ausgehend vom Boden 96 umfasst die Aufnahme 100 einen sich verjüngenden Abschnitt 106, gefolgt von einem zylindrischen Abschnitt 108, auf den wiederum ein sich verjüngender Abschnitt 110 folgt, gefolgt von einem weiteren zylindrischen Abschnitt 112 sowie, im Bereich der Einführöffnung 102, ein weiterer sich verjüngender Abschnitt 114. Die Abschnitte 106 bis 114 gehören zu einer in Bezug auf die Achse 96 radial innenseitigen Mantelfläche 116 der Wandung 88.

Das zweite Befestigungselement 66 umfasst einen zapfenförmigen Vorsprung 118. Am Halteglied 70 ist ein buchsenförmiges Basisglied 120 des Befestigungselementes 66 gebildet, das mit dem Vorsprung 118 verbunden ist. Zu diesem Zweck greift der Vorsprung 118 mit einem Abschnitt 122 einer Ausnehmung 124 des Basisgliedes 120 ein. Über eine Verschraubung 126 mit einem Innengewinde des Basisgliedes 120 und einem Außengewinde des Abschnittes 122 ist der Vorsprung 118 am Basisglied 120 festgelegt. Eine Ringschulter 128 ist außerhalb der Ausnehmung 124 angeordnet und liegt flanschartig an einem Rand der Öffnung der Ausnehmung 124 an.

Der Vorsprung 118 ist als Aufnahmeglied 130 ausgeführt, der einen Aufnahmekörper 132 mit einem Aufnahmeraum 134 bildet. Insgesamt ist der Vorsprung 118 rotationssymmetrisch bezüglich einer Achse 136. In einer Befestigungsstellung der Befestigungselemente 64, 66 fluchten die Achsen 96, 136 miteinander und bilden eine gemeinsame Achse beider Befestigungselemente 64, 66.

Der Vorsprung 118 umfasst eine Wandung 138, die den Aufnahmeraum 134 begrenzt. Die Wandung 138 fasst den Aufnahmeraum 134 in Umfangsrichtung der Achse 136 sowie stirnseitig ein. Der stirnseitige Abschnitt der Wandung 138 ist im vorliegenden Fall planar ausgestaltet, ebenso wie der Boden 98, der durch den stirnseitigen Abschnitt der Wandung 88 gebildet ist. In der Befestigungsstellung der Befestigungselemente 64, 66 kann der stirnseitige Abschnitt der Wandung 138 flächig am Boden 98 anliegen.

Im Aufnahmeraum 134 ist ein Magnetelement 140 angeordnet. Das Magnetelement 140 ist ein Magnet 142, insbesondere ein Permanentmagnet, beispielsweise ein NdFeB-Magnet. Beispielsweise ist der Magnet 142 scheibenförmig.

Der Magnet 142 ist formschlüssig im Aufnahmeraum 134 angeordnet und liegt an dem stirnseitigen Abschnitt der Wandung 138 an. In Bezug auf das Befestigungselement 64 ist der Magnet an der Stirnseite hinter der Wandung 138 angeordnet.

Die Magnete weisen einen Abstand voneinander auf. Zwischen den Magneten 92, 142 ist ein Zwischenraum vorhanden, in dem vorliegend die beiden stirnseitigen Abschnitte der Wandungen 88, 138 angeordnet sind.

Ein Andrückelement 144, ausgestaltet als Schraubenfeder, ist im Aufnahmeraum 134 angeordnet und beaufschlagt den Magneten 142 mit einer auf das Befestigungselement 64 gerichteten Kraft. Die dem Magneten abgewandte Seite des Andrückelementes 144 stützt sich am Basisglied 120 ab.

Der Vorsprung 118 ist in der Einführrichtung 104 sich verjüngend ausgestaltet. Ausgehend von dem stirnseitigen Abschnitt der Wandung 138 umfasst der Vorsprung 118 einen sich verjüngenden Abschnitt 146, gefolgt von einem zylindrischen Abschnitt 148, gefolgt von einem sich verjüngenden Abschnitt 150, gefolgt von einem weiteren zylindrischen Abschnitt 152, auf den ein Abschnitt 154 mit Freistich folgt. Die Abschnitte 146 bis 154 sind von der außenseitigen Mantelfläche 156 des Vorsprungs 118 gebildet.

Wie bereits erwähnt, können die Befestigungselemente 64, 66 eine Befestigungsstellung einnehmen. Zu diesem Zweck kann der Vorsprung 118 in die Aufnahme 100 eingeführt werden. Über die jeweiligen Verjüngungen ist dies für den Benutzer handhabungsfreundlich möglich. Dabei wird der Vorsprung 118 solange eingeführt, bis die Wandung 138 stirnseitig am Boden 98 anliegt. Ist dies der Fall, liegt die Wandung 88 mit dem Rand der Einführöffnung 102 an der Ringschulter 128 an.

In der Befestigungsstellung stehen die Befestigungselemente 64, 66 formschlüssig miteinander in Eingriff und sind spaltlos aneinandergefügt. Die folgenden jeweiligen Abschnitte der Aufnahme 100 und des Vorsprungs 118 sind einander benachbart: Abschnitte 106 und 146, 108 und 148, 110 und 150, 112 und 152 sowie 114 und 154.

Über die Abschnitte 108 und 148 einerseits sowie 112 und 152 andererseits sind jeweils Passungen 158 gebildet. Die Passungen sind im vorliegenden Fall Zylinderpassungen.

Als vorteilhaft erweist es sich in der Praxis, wenn die eine jeweilige Verjüngung aufweisenden Abschnitte 106, 110, 114, 146 und 150 konisch verjüngt sind. Günstig kann es insbesondere sein, dass die Konizität der Abschnitte 110 und 152 in axialer Richtung nicht konstant ist, sondern dass diese Abschnitte in axialer Richtung zwei Bereiche mit bezüglich der Achse 96, 136 unterschiedlicher Neigung aufweisen.

Die Magnete 92, 142 sind im vorliegenden Fall wie erwähnt formschlüssig in den Aufnahmeräumen 86 bzw. 134 aufgenommen. Vorgesehen sein kann gemäß der vorliegenden Erfindung beispielsweise folgende Art der Befestigung am jeweiligen Befestigungselement 64, 66: durch Kraft- und/oder Formschluss, durch Verschraubung, durch Verpressen, durch Verklebung, durch Einspritzen oder Eingießen.

Nehmen die Befestigungselemente 64, 66 die Befestigungsstellung ein, wirken die Magnete 92, 142 über die Magnetkraft zusammen. Zu diesem Zweck sind die Magnete 92, 142 insbesondere zueinander entgegengesetzt gepolt. Die magnetische Kopplung erlaubt es dem Benutzer auf handhabungsfreundliche Weise, das Formatteil 42 mit dem Halteteil 54 zu verbinden. Etwaige Schraubverbindungen oder Druckstücke, wie sie bei herkömmlichen Formatteilen und Halteteilen zum Einsatz kommen, können eingespart werden. In entsprechender Weise kann das Formatteil 42 auf benutzerfreundliche Weise durch Anheben vom Halteteil 54 gelöst werden, indem die Magnetkraft überwunden wird.

Die Befestigungseinrichtung 62 ist insbesondere pharmagerecht beschaffen. Die Aufnahmeräume 86 und 134 sind über die jeweiligen Verschraubungen 76, 126 abgeschlossen. Die Basisglieder 72, 120 und die Aufnahmeglieder 74, 130 sind insbesondere aus einem pharmagerechten Material gefertigt, beispielsweise aus Edelstahl.

Nachfolgend wird unter Verweis auf die Figuren 7 und 8 auf die Beschaffenheit der Stößel 44 als Formatteile 42 eingegangen. Als Halteteil 54 ist dabei ein Stützteil 160 vorgesehen, auf dem der Stößel 44 angeordnet ist.

Mittels einer Befestigungseinrichtung 162 mit einem ersten Befestigungselement 164 und einem zweiten Befestigungselement 166 kann der Stößel 44 mit dem Stützteil 160 lösbar verbunden werden.

Das erste Befestigungselement 164 wird vom Stößel 44 selbst gebildet. Dieser ist kolbenartig und weist an einer dem Stützteil 160 zugewandten Seite einen radial bezüglich einer Achse 168 erstreckten Vorsprung 170 auf. In axialer Richtung ist ein Vorsprung 172 vorgesehen.

Die Achse 168 ist eine gemeinsame Achse der Befestigungselemente 164, 166, wenn diese die Befestigungsstellung einnehmen.

Stirnseitig am Vorsprung 172 ist eine Ausnehmung 174 gebildet. In der Ausnehmung 174 ist ein Magnetelement 176 in Gestalt eines Magneten 178 und insbesondere Permanentmagneten angeordnet. Der Magnet 178 ist formschlüssig in der Ausnehmung 174 aufgenommen und darin beispielsweise mittels eines Schraubelementes 180 gesichert. Der Magnet 178 ist vorliegend ringförmig.

Das zweite Befestigungselement 166 wird vom Stützteil 160 ausgebildet. In Richtung des Stößels 44 umfasst das Stützteil 160 eine Aufnahme 182. An einem Boden 184 der Aufnahme 182 ist eine Ausnehmung 186 gebildet.

Ein Magnetelement 188, insbesondere ausgestaltet als Magnet 190 und speziell Permanentmagnet, ist in der Ausnehmung 186 angeordnet. Der Magnet 190 ist beispielsweise mittels eines Schraubelementes 192 in der Ausnehmung 186 gesichert. Der Magnet 190 ist vorliegend ringförmig.

In der Befestigungsstellung der Befestigungselemente 164, 166 greift der Vorsprung 172 formschlüssig in die Aufnahme 182 ein. Ein Rand 194 einer Einführöffnung 196 der Aufnahme 182 liegt am radialen Vorsprung 170 an.

Im Bereich des Bodens 184 der Aufnahme 182 ist ein Zwischenraum 198 zwischen den Magneten 178 und 190 gebildet, so dass diese voneinander beabstandet sind und nicht aneinander anliegen. Der Zwischenraum ist vorliegend ein Luftspalt.

Eine Passung 200, vorliegend eine zylindrische Passung, ist durch jeweilige Abschnitte 202 bzw. 204 der Mantelflächen des Vorsprungs 172 außenseitig bzw. der Aufnahme 182 innenseitig gebildet und sichert einen zuverlässigen Sitz des Formatteils 42 am Halteteil 54. Zusätzlich ist ein Verdrehsicherungselement 206 zwischen dem Vorsprung 172 und dem Rand 194 wirksam.

Nehmen die Befestigungselemente 164, 166 die Befestigungsstellung ein, wirken die Magnete 178, 190 über die Magnetkraft zusammen. Zu diesem Zweck sind die Magnete 178, 190 insbesondere zueinander entgegengesetzt gepolt. Die magnetische Kopplung erlaubt es dem Benutzer auf handhabungsfreundliche Weise, das Formatteil 42 mit dem Halteteil 54 zu verbinden. In entsprechender Weise kann das Formatteil 42 auf benutzerfreundliche Weise durch Anheben vom Halteteil 54 gelöst werden, indem die Magnetkraft überwunden wird. Im Übrigen wird auf die voranstehenden Ausführungen verwiesen.

Der Stößel 44 dient dazu, Schließelemente 208, vorliegend in Gestalt von Kolbenstopfen 210, zum Verschließen der Vials 14 in ein Aufnahmeteil 212 zu überführen. Mit dem Aufnahmeteil 212 werden die Kolbenstopfen 210 oberhalb der befüllten Vials 14 platziert und anschließend mit in der Zeichnung nicht dargestellten Stößeln angedrückt.

Auch die weiteren vorstehend genannten Formatteile 42, beispielsweise die Greifelemente 46, Aufnahmeelemente 48 oder das Halteelement 50, können mittels erfindungsgemäßer Befestigungseinrichtungen an den ihnen zugeordneten Halteteilen 54 lösbar angebracht werden, wobei Magnetelemente zum Bereitstellen einer Magnethaltekraft zum Einsatz kommen.

### Bezugszeichenliste

- 10: Vorrichtung
- 12: Behälter
- 14: Vial
- 16: Zuführbereich
- 18, 20: Transportrad
- 22: Transporteinrichtung
- 24, 28: Wiegestation
- 26: Befüllstation
- 30: Schließstation
- 32: Kontrollstation
- 34, 36: Transportrad
- 38: Abgabebereich
- 40: Formatsatz
- 42: Formatteil
- 44: Stößel
- 46: Greifelement
- 48: Aufnahmeelement
- 50: Halteelement
- 52: Nadel
- 54: Halteteil
- 56: Gestell
- 58: Aufstellelement
- 60: Säulenelement
- 62: Befestigungseinrichtung
- 64, 66: Befestigungselement
- 68, 70: Halteglied
- 72: Basisglied
- 74: Aufnahmeglied
- 76: Verschraubung
- 78: Mantelfläche
- 80: Mantelfläche
- 82: Aufnahmekörper
- 84: Endabschnitt
- 86: Aufnahmeraum
- 88: Wandung
- 90: Magnetelement
- 92: Magnet
- 94: Dichtelement
- 96: Achse
- 98: Boden
- 100: Aufnahme
- 102: Einführöffnung
- 104: Einführrichtung
- 106, 108, 110, 112, 114: Abschnitt
- 116: Mantelfläche
- 118: Vorsprung
- 120: Basisglied
- 122: Abschnitt
- 124: Ausnehmung
- 126: Verschraubung
- 128: Ringschulter
- 130: Aufnahmeglied
- 132: Aufnahmekörper
- 134: Aufnahmeraum
- 136: Achse
- 138: Wandung
- 140: Magnetelement
- 142: Magnet
- 144: Andrückelement
- 146, 148, 150, 152, 154: Abschnitt
- 156: Mantelfläche
- 158: Passung
- 160: Stützteil
- 162: Befestigungseinrichtung
- 164, 166: Befestigungselement
- 168: Achse
- 170, 172: Vorsprung
- 174: Ausnehmung
- 176: Magnetelement
- 178: Magnet
- 180: Schraubelement
- 182: Aufnahme
- 184: Boden
- 186: Ausnehmung
- 188: Magnetelement
- 190: Magnet
- 192: Schraubelement
- 194: Rand
- 196: Einführöffnung
- 198: Zwischenraum
- 200: Passung
- 202, 204: Abschnitt
- 206: Verdrehsicherungselement
- 208: Schließelement
- 210: Kolbenstopfen
- 212: Aufnahmeteil

## Patentansprüche

1. Befestigungseinrichtung zum lösbaren Befestigen eines Formatteils (42) einer Vorrichtung (10) zum Verarbeiten von pharmazeutischen Behältern (12) oder Komponenten von pharmazeutischen Behältern (12) an einem Halteteil (54) der Vorrichtung (10), wobei das Formatteil (42) mindestens eine behälterspezifische, behälterkomponentenspezifische oder verarbeitungsspezifische Beschaffenheit aufweist,
wobei die Befestigungseinrichtung (62; 162) ein erstes Befestigungselement (64; 164) und ein zweites Befestigungselement (66; 166) umfasst, wobei das erste Befestigungselement (64; 164) am Formatteil (42) angeordnet oder von diesem umfasst ist und das zweite Befestigungselement (66; 166) am Halteteil (54) angeordnet oder von diesem umfasst ist,
wobei die Befestigungselemente (64, 66; 164, 166) eine Aufnahme (100; 182) und einen Vorsprung (118; 172) umfassen, der in einer Befestigungsstellung der Befestigungselemente (64, 66; 164, 166) in der Aufnahme (100; 182) angeordnet ist,
wobei die Befestigungselemente (64, 66; 164, 166) Magnetelemente (90, 140; 176, 188) umfassen, die in der Befestigungsstellung der aneinandergefügten Befestigungselemente (64, 66; 164, 166) zusammenwirken, in der die Befestigungselemente (64, 66; 164, 166) formschlüssig miteinander in Eingriff stehen,
wobei das Magnetelement (90, 140; 176, 188) in dem jeweiligen Befestigungselement (64, 66; 164, 166) frei von Kontakt mit der Atmosphäre gekapselt ist und die Magnetelemente (90, 140; 176, 188) in der Befestigungsstellung der Befestigungselemente (64, 66; 164, 166) im Abstand zueinander und frei von Kontakt miteinander angeordnet sind, **dadurch gekennzeichnet, dass** eines der Magnetelemente (90, 140; 176, 188) am Boden (98; 184) der Aufnahme (100; 182) angeordnet ist und das andere Magnetelement (90, 140; 176, 188) an einer Stirnseite des Vorsprungs (118; 172) angeordnet ist.

2. Befestigungseinrichtung nach Anspruch 1, **dadurch gekennzeichnet, dass** mindestens ein Magnetelement (90, 140; 176, 188) ein Magnet (92, 142; 178, 190) ist, insbesondere dass beide Magnetelemente (90, 140; 176, 188) Magnete (92, 142; 178, 190) sind oder dass nur ein Magnetelement (90, 140; 176, 188) ein Magnet (92, 142; 178, 190) ist, das andere Magnetelement (90, 140; 176, 188) ein magnetisierbares Material.

3. Befestigungseinrichtung nach Anspruch 2, **dadurch gekennzeichnet, dass** der Magnet (92, 142; 178, 190) ein Permanentmagnet ist.

4. Befestigungseinrichtung nach einem der voranstehenden Ansprüche, **dadurch gekennzeichnet, dass** das Magnetelement (90, 140; 176, 188) auf zumindest eine der folgenden Weisen am jeweiligen Befestigungselement festgelegt ist:
- durch Kraft- und/oder Formschluss;
- durch Stoffschluss;
- durch Verschraubung;
- durch Verpressen;
- durch Verklebung;
- das Magnetelement (90, 140; 176, 188) ist in das Befestigungselement (64, 66; 164, 166) eingespritzt, eingegossen oder eingewalzt.

5. Befestigungseinrichtung nach einem der voranstehenden Ansprüche, **dadurch gekennzeichnet, dass** die Befestigungselemente (64, 66; 164, 166) in der Befestigungsstellung spaltlos aneinandergefügt sind.

6. Befestigungseinrichtung nach einem der voranstehenden Ansprüche, **dadurch gekennzeichnet, dass** zumindest eines der Folgenden gilt:
- die Aufnahme (100; 182) und der Vorsprung (118; 172) sind jeweils rotationssymmetrisch oder im Wesentlichen rotationssymmetrisch ausgestaltet bezüglich einer gemeinsamen Achse (96; 168) der Befestigungselemente (64, 66; 164, 166), wenn diese die Befestigungsstellung einnehmen;
- der Vorsprung (118; 172) ist sich in Einführrichtung (104) in die Aufnahme (100; 182) hinein verjüngend ausgestaltet, und die Aufnahme (100; 182) ist ausgehend von einer Einführöffnung (102) für den Vorsprung (118; 172) sich in der Einführrichtung (104) verjüngend ausgestaltet;
- der Vorsprung (118; 172) und die Aufnahme (100; 182) umfassen mindestens eine korrespondierende, in der Befestigungsstellung aneinander gefügte Passung (158; 200), insbesondere ist die mindestens eine Passung (158; 200) eine Zylinderpassung, die durch jeweilige Mantelflächen (116, 156) des Vorsprungs (118; 172) und der Aufnahme (100; 182) gebildet ist, wobei vorzugsweise, bezogen auf die Einführrichtung (104), zwei Passungen (158) im Abstand zueinander am Vorsprung (118; 172) und an der Aufnahme (100; 182) angeordnet sind.

7. Befestigungseinrichtung nach einem der voranstehenden Ansprüche, **dadurch gekennzeichnet, dass** zumindest eines der Befestigungselemente (64, 66; 164, 166) einen Aufnahmekörper (82; 132) mit einem Aufnahmeraum (86; 134) aufweist oder bildet, in dem das Magnetelement (90, 140; 176, 188) angeordnet ist, an einer Seite einer Wandung (88; 138) des Aufnahmeraums (86; 134), die dem jeweils anderen Befestigungselement (64, 66; 164, 166) abgewandt ist.

8. Befestigungseinrichtung nach Anspruch 7, **dadurch gekennzeichnet, dass** zumindest eines der Folgenden gilt:
- das Magnetelement (90, 140; 176, 188) ist formschlüssig im Aufnahmeraum (86; 134) aufgenommen;
- das Magnetelement (90, 140; 176, 188) ist mittels eines Andrückelementes (144) mit einer Kraft vorzugsweise in Richtung des weiteren Befestigungselementes (64, 66; 164, 166) beaufschlagt, und/oder ein Dichtelement (94) ist an der dem jeweils anderen Befestigungselement (64, 66; 164, 166) abgewandten Seite am Magnetelement (90, 140; 176, 188) angeordnet;
- das Befestigungselement (64, 66; 164, 166) umfasst ein den Aufnahmeraum (86; 134) bildendes Aufnahmeglied (74, 130) und ein Basisglied (72; 120), das mit dem Aufnahmeglied (74; 130) vorzugsweise durch Verschraubung (76; 126) verbunden ist.

9. Befestigungseinrichtung nach einem der voranstehenden Ansprüche, **dadurch gekennzeichnet, dass** die Befestigungseinrichtung (62; 162) eine Mehrzahl von ersten Befestigungselementen (64; 164) und zweiten Befestigungselementen (66; 166) umfasst, vorzugsweise dass die ersten Befestigungselemente (64; 164) identisch ausgestaltet sind und die zweiten Befestigungselemente (66; 166) identisch ausgestaltet sind.

10. Vorrichtung zum Verarbeiten von pharmazeutischen Behältern (12) oder Komponenten pharmazeutischer Behälter (12), umfassend eine Befestigungseinrichtung (62; 162) nach einem der voranstehenden Ansprüche, mindestens ein Formatteil (42) und mindestens ein diesem zugeordnetes Halteteil (54), wobei das mindestens eine Formatteil (42) mindestens eine behälterspezifische, behälterkomponentenspezifische oder verarbeitungsspezifische Beschaffenheit aufweist, wobei das mindestens eine Formatteil (42) mit dem mindestens einen Halteteil (54) mittels der Befestigungseinrichtung (62; 162) lösbar verbindbar ist.

11. Vorrichtung nach Anspruch 10, **dadurch gekennzeichnet, dass** einem jeweiligen Halteteil (54) zwei oder mehr Formatteile (42) zugeordnet sind, die sich hinsichtlich ihrer Beschaffenheiten voneinander unterscheiden, und dass die Formatteile (42) wahlweise mit dem Halteteil (54) verbindbar sind.

12. Vorrichtung nach Anspruch 10 oder 11, **dadurch gekennzeichnet, dass** einem Formatteil (42) eine Mehrzahl von Halteteilen (54) zugeordnet ist und über eine jeweilige Befestigungseinrichtung (62; 162) mit den Halteteilen (54) verbunden ist.

13. Vorrichtung nach einem der Ansprüche 10 bis 12, **dadurch gekennzeichnet, dass** das Formatteil (54) ein Trägerteil für die Behälter (12) ist, insbesondere ein Transportrad (18, 20, 34, 36) oder ein Greifelement (46) für die Behälter (12).

14. Vorrichtung nach einem der Ansprüche 10 bis 13, **dadurch gekennzeichnet, dass** das Formatteil (42) ein Stößel (44) für ein Schließelement (208) des Behälters (12) ist.

## Claims

1. A securing device for detachably fastening a format part (42) of an apparatus (10) for processing pharmaceutical containers (12) or components of pharmaceutical containers (12) on a holding part (54) of the apparatus (10), wherein the format part (42) has at least one container-specific, container-component-specific or process-specific quality,
wherein the securing device (62; 162) comprises a first securing element (64; 164) and a second securing element (66; 166), wherein the first securing element (64; 164) is arranged on or comprised by the format part (42), and the second securing element (66; 166) is arranged on or comprised by the holding part (54),
wherein the securing elements (64, 66; 164, 166) comprise a receptacle (100; 182) and a projection (118; 172) which in a securing position of the securing elements (64, 66; 164, 166), is arranged in the receptacle (100; 182),
wherein the securing elements (64, 66; 164, 166) comprise magnetic elements (90, 140; 176, 188) which interact when the interconnected securing elements (64, 66; 164, 166) are in the securing position, in which the securing elements (64, 66; 164, 166) are positively engaged with one another,
wherein the magnetic element (90, 140; 176, 188) is encapsulated in the respective securing element (64, 66; 164, 166) free from contact with the atmosphere, and the magnetic elements (90, 140; 176, 188) in the securing position of the securing elements (64, 66; 164, 166) are arranged at a distance from each other and free from contact with one another, **characterized in that** one of the magnetic elements (90, 140; 176, 188) is arranged at the bottom (98; 184) of the receptacle (100; 182) and the other magnetic element (90, 140; 176, 188) is arranged on an end face of the projection (118; 172).

2. The securing device in accordance with claim 1, **characterized in that** at least one magnetic element (90, 140; 176, 188) is a magnet (92, 142; 178, 190), in particular both magnetic elements (90, 140; 176, 188) are magnets (92, 142; 178, 190) or **in that** only one magnetic element (90, 140; 176, 188) is a magnet (92, 142; 178, 190) and the other magnetic element (90, 140; 176, 188) is a magnetizable material.

3. The securing device in accordance with claim 2, **characterized in that** the magnet (92, 142; 178, 190) is a permanent magnet.

4. The securing device in accordance with one of the preceding claims, **characterized in that** the magnetic element (90, 140; 176, 188) is fixed to the respective securing element in at least one of the following ways:
- by a force-locking and/or positive connection;
- by an integral bond;
- by a screw connection;
- by pressing;
- by gluing;
- the magnetic element (90, 140; 176, 188) is injected, cast or rolled into the securing element (64, 66; 164, 166).

5. The securing device in accordance with one of the preceding claims, **characterized in that** the securing elements (64, 66; 164, 166) are interconnected with one another without gaps in the securing position.

6. The securing device in accordance with one of the preceding claims, **characterized in that** at least one of the following applies:
- the receptacle (100; 182) and the projection (118; 172) are each rotationally symmetrical or substantially rotationally symmetrical with respect to a common axis (96; 168) of the securing elements (64, 66; 164, 166) when they assume the securing position;
- the projection (118; 172) is configured to taper in the insertion direction (104) into the receptacle (100; 182), and **in that** the receptacle (100; 182) is configured to taper in the insertion direction (104) starting from an insertion opening (102) for the projection (118; 172);
- the projection (118; 172) and the receptacle (100; 182) comprise at least one corresponding fit (158; 200) interconnected in the securing position, in particular **in that** the at least one fit (158; 200) is a cylinder fit formed by respective lateral surfaces (116, 156) of the projection (118; 172) and of the receptacle (100; 182), wherein preferably, relative to the insertion direction (104), two fits (158) are arranged at a distance from one another on the projection (118; 172) and on the receptacle (100; 182).

7. The securing device in accordance with one of the preceding claims, **characterized in that** at least one of the securing elements (64, 66; 164, 166) has or forms a receiving body (82; 132) with a receiving space (86; 134) in which the magnetic element (90, 140; 176, 188) is arranged on one side of a wall (88; 138) of the receiving space (86; 134) which faces away from the respectively other securing element (64, 66; 164, 166).

8. The securing device in accordance with claim 7, **characterized in that** at least one of the following applies:
- the magnetic element (90, 140; 176, 188) is positively engaged in the receiving space (86; 134);
- the magnetic element (90, 140; 176, 188) is acted upon by a pressing element (144) with a force preferably in the direction of the additional securing element (64, 66; 164, 166), and/or **in that** a sealing element (94) is arranged on the magnetic element (90, 140; 176, 188) on the side facing away from the respectively other securing element (64, 66; 164, 166);
- the securing element (64, 66; 164, 166) comprises a receiving member (74, 130) forming the receiving space (86; 134) and a base member (72; 120) connected to the receiving member (74; 130) preferably by a screw connection (76; 126).

9. The securing device in accordance with one of the preceding claims, **characterized in that** the securing device (62; 162) comprises a plurality of first securing elements (64; 164) and second securing elements (66; 166), and preferably **in that** the first securing elements (64; 164) are configured identically, and the second securing elements (66; 166) are configured identically.

10. An apparatus for processing pharmaceutical containers (12) or components of pharmaceutical containers (12), comprising a securing device (62; 162) according to one of the preceding claims at least one format part (42) and at least one holding part (54) assigned thereto, wherein the at least one format part (42) has at least one container-specific, container-component-specific or process-specific quality, and wherein the at least one format part (42) is detachably connectable to the at least one holding part (54) by means of the securing device (62; 162).

11. The apparatus in accordance with claim 10, **characterized in that** two or more format parts (42), which differ from one another with regard to their qualities, are assigned to a respective holding part (54), and **in that** the format parts (42) are selectively connectable to the holding part (54).

12. The apparatus in accordance with claim 10 or 11, **characterized in that** a format part (42) is assigned a plurality of holding parts (54) and is connected to the holding parts (54) via a respective securing device (62; 162).

13. The apparatus in accordance with one of claims 10 to 12, **characterized in that** the format part (54) is a carrier part for the containers (12), in particular a transport wheel (18, 20, 34, 36) or a gripping element (46) for the containers (12).

14. The apparatus in accordance with one of claims 10 to 13, **characterized in that** the format part (42) is a plunger (44) for a closing element (208) of the container (12).

## Revendications

1. Dispositif de fixation pour fixer de manière amovible une pièce de format (42) d'un dispositif (10) pour le traitement de récipients pharmaceutiques (12) ou de composants de récipients pharmaceutiques (12) à une pièce de support (54) du dispositif (10), la pièce de format (42) présentant au moins une nature spécifique au récipient, spécifique au composant du récipient ou spécifique au traitement,
le dispositif de fixation (62 ; 162) comprenant un premier élément de fixation (64 ; 164) et un deuxième élément de fixation (66 ; 166), le premier élément de fixation (64 ; 164) étant agencé sur la pièce de format (42) ou compris par celle-ci et le deuxième élément de fixation (66 ; 166) étant agencé sur la pièce de support (54) ou compris par celle-ci,
les éléments de fixation (64, 66 ; 164, 166) comprenant un logement (100 ; 182) et une saillie (118 ; 172) qui est agencée dans le logement (100 ; 182) dans une position de fixation des éléments de fixation (64, 66 ; 164, 166),
les éléments de fixation (64, 66 ; 164, 166) comprenant des éléments magnétiques (90, 140 ; 176, 188) qui coopèrent dans la position de fixation des éléments de fixation (64, 66 ; 164, 166) assemblés les uns aux autres, dans laquelle les éléments de fixation (64, 66 ; 164, 166) sont en prise les uns avec les autres par complémentarité de forme,
l'élément magnétique (90, 140 ; 176, 188) étant encapsulé dans l'élément de fixation (64, 66 ; 164, 166) respectif sans contact avec l'atmosphère et les éléments magnétiques (90, 140 ; 176, 188) étant agencés à distance les uns des autres et sans contact entre eux dans la position de fixation des éléments de fixation (64, 66 ; 164, 166), **caractérisé en ce que** l'un des éléments magnétiques (90, 140 ; 176, 188) est agencé au fond (98 ; 184) du logement (100 ; 182) et l'autre élément magnétique (90, 140 ; 176, 188) est agencé sur une face frontale de la saillie (118 ; 172).

2. Dispositif de fixation selon la revendication 1, **caractérisé en ce qu'**au moins un élément magnétique (90, 140 ; 176, 188) est un aimant (92, 142 ; 178, 190), en particulier **en ce que** les deux éléments magnétiques (90, 140 ; 176, 188) sont des aimants (92, 142 ; 178, 190) ou **en ce qu'**un seul un élément magnétique (90, 140 ; 176, 188) est un aimant (92, 142 ; 178, 190), l'autre élément magnétique (90, 140 ; 176, 188) étant un matériau magnétisable.

3. Dispositif de fixation selon la revendication 2, **caractérisé en ce que** l'aimant (92, 142 ; 178, 190) est un aimant permanent.

4. Dispositif de fixation selon l'une des revendications précédentes, **caractérisé en ce que** l'élément magnétique (90, 140 ; 176, 188) est fixé à l'élément de fixation respectif d'au moins une des manières suivantes :
- par adhérence et/ou par complémentarité de forme ;
- par ancrage par adhérence ;
- par vissage ;
- par pressage ;
- par collage ;
- l'élément magnétique (90, 140 ; 176, 188) est injecté, coulé ou laminé dans l'élément de fixation (64, 66 ; 164, 166).

5. Dispositif de fixation selon l'une des revendications précédentes, **caractérisé en ce que** les éléments de fixation (64, 66 ; 164, 166) sont assemblés les uns aux autres sans interstice dans la position de fixation.

6. Dispositif de fixation selon l'une quelconque des revendications précédentes, **caractérisé en ce qu'**au moins l'un des éléments suivants s'applique :
- le logement (100 ; 182) et la saillie (118 ; 172) sont chacun réalisés à symétrie de révolution ou sensiblement à symétrie de révolution par rapport à un axe commun (96 ; 168) des éléments de fixation (64, 66 ; 164, 166) lorsque ceux-ci occupent la position de fixation ;
- la saillie (118 ; 172) est configurée en se rétrécissant dans le sens d'introduction (104) dans le logement (100 ; 182), et le logement (100 ; 182) est configuré en se rétrécissant dans le sens d'introduction (104) à partir d'une ouverture d'introduction (102) pour la saillie (118 ; 172) ;
- la saillie (118 ; 172) et le logement (100 ; 182) comprennent au moins un ajustement (158 ; 200) correspondant assemblé dans la position de fixation, en particulier l'au moins un ajustement (158 ; 200) est un ajustement cylindrique qui est formé par des surfaces d'enveloppe (116, 156) respectives de la saillie (118 ; 172) et du logement (100 ; 182), deux ajustements (158) étant de préférence agencés à distance l'un de l'autre sur la saillie (118 ; 172) et sur le logement (100 ; 182) par rapport au sens d'introduction (104).

7. Dispositif de fixation selon l'une des revendications précédentes, **caractérisé en ce qu'**au moins l'un des éléments de fixation (64, 66 ; 164, 166) présente ou forme un corps de réception (82 ; 132) avec un espace de réception (86 ; 134) dans lequel l'élément magnétique (90, 140 ; 176, 188) est agencé, sur un côté d'une paroi (88 ; 138) de l'espace de réception (86 ; 134) qui est opposé à l'autre élément de fixation respectif (64, 66 ; 164, 166).

8. Dispositif de fixation selon la revendication 7, **caractérisé en ce qu'**au moins l'un des éléments suivants s'applique :
- l'élément magnétique (90, 140 ; 176, 188) est logé par complémentarité de forme dans l'espace de réception (86 ; 134) ;
- l'élément magnétique (90, 140 ; 176, 188) est soumis à une force au moyen d'un élément de pression (144), de préférence en direction de l'autre élément de fixation (64, 66 ; 164, 166), et/ou un élément d'étanchéité (94) est agencé sur l'élément magnétique (90, 140 ; 176, 188) du côté opposé à l'autre élément de fixation (64, 66 ; 164, 166) ;
- l'élément de fixation (64, 66 ; 164, 166) comprend un élément de réception (74, 130) formant l'espace de réception (86 ; 134) et un élément de base (72 ; 120) qui est relié à l'élément de réception (74 ; 130), de préférence par vissage (76 ; 126).

9. Dispositif de fixation selon l'une des revendications précédentes,
**caractérisé en ce que** le dispositif de fixation (62 ; 162) comprend une pluralité de premiers éléments de fixation (64 ; 164) et de deuxièmes éléments de fixation (66 ; 166), de préférence **en ce que** les premiers éléments de fixation (64 ; 164) sont de conception identique et les deuxièmes éléments de fixation (66 ; 166) sont de conception identique.

10. Dispositif pour le traitement de récipients pharmaceutiques (12) ou de composants de récipients pharmaceutiques (12), comprenant un dispositif de fixation (62 ; 162) selon l'une des revendications précédentes, au moins une pièce de format (42) et au moins une pièce de support (54) associée à celle-ci, l'au moins une pièce de format (42) présentant au moins une constitution spécifique au récipient, spécifique au composant de récipient ou spécifique au traitement, l'au moins une pièce de format (42) pouvant être reliée de manière amovible à l'au moins une pièce de support (54) au moyen du dispositif de fixation (62 ; 162).

11. Dispositif selon la revendication 10, **caractérisé en ce que** deux ou plusieurs pièces de format (42) qui se distinguent les unes des autres quant à leurs caractéristiques sont associées à une pièce de support respective (54) et **en ce que** les pièces de format (42) peuvent être reliées au choix à la pièce de support (54).

12. Dispositif selon la revendication 10 ou 11, **caractérisé en ce qu'**une pluralité de pièces de support (54) est associée à une pièce de format (42) et est reliée aux pièces de support (54) par un dispositif de fixation respectif (62 ; 162).

13. Dispositif selon l'une des revendications 10 à 12, **caractérisé en ce que** la pièce de format (54) est une pièce de support pour les récipients (12), notamment une roue de transport (18, 20, 34, 36) ou un élément de préhension (46) des récipients (12).

14. Dispositif selon l'une des revendications 10 à 13, **caractérisé en ce que** la pièce de format (42) est un poussoir (44) pour un élément de fermeture (208) du récipient (12).
